# EUROPEAN PATENT SPECIFICATION

(11) **EP 2 884 795 B1**
(45) Date of publication and mention of the grant of the patent: **07.02.2018**
(21) Application number: 13306731.4
(22) Date of filing: 16.12.2013
(51) Int. Cl.: H04W 72/12, H04W 48/16, H04W 24/02, H04L 5/00

(54) **A METHOD FOR WIRELESS COMMUNICATION USING ALMOST BLANK SUBFRAMES, AND A COMMUNICATION NETWORK**
VERFAHREN ZUR DRAHTLOSEN KOMMUNIKATION MITTELS WEITGEHEND LEEREN SUBFRAMES UND KOMMUNIKATIONSNETZ
PROCÉDÉ DE COMMUNICATION SANS FIL UTILISANT DES SOUS-TRAMES PRESQUE VIDES ET RÉSEAU DE COMMUNICATION

(43) Date of publication of application: 17.06.2015
(73) Proprietor: ALCATEL LUCENT, 92100 Boulogne-Billancourt (FR)
(72) Inventor: Weber, Andreas, 70435 Stuttgart (DE); Bakker, Hajo, 70435 Stuttgart (DE); Klein, Siegfried, 70435 Stuttgart (DE); Barth, Ulrich, 70435 Stuttgart (DE)
(74) Representative: Kleinbub, Oliver

(56) References cited:
- EP-A1- 2 640 124
- HUAWEI ET AL: "Interference measurement resource configuration and CQI calculation", 3GPP DRAFT; R1-121947, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600248, [retrieved on 2012-05-12]
- DAVID J MAZZARESE ET AL: "An efficient feedback and scheduling scheme for cooperative multiple-point transmission in heterogeneous networks", PERSONAL INDOOR AND MOBILE RADIO COMMUNICATIONS (PIMRC), 2012 IEEE 23RD INTERNATIONAL SYMPOSIUM ON, IEEE, 9 September 2012 (2012-09-09), pages 112-117, XP032272707, ISSN: 2166-9570, DOI: 10.1109/PIMRC.2012.6362515 ISBN: 978-1-4673-2566-0
- ALCATEL-LUCENT SHANGHAI BELL ET AL: "X2 Signalling Design for Almost Blank Subframe Pattern", 3GPP DRAFT; R3-103333, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jacksonville, USA; 20101115, 8 November 2010 (2010-11-08), XP050496524, [retrieved on 2010-11-08]
- NEC: "Considerations on UE demodulation and CSI verification for eICIC", 3GPP DRAFT; R4-113727 EICIC_DEMOD_CSI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Roma; 20110627, 22 June 2011 (2011-06-22), XP050542844, [retrieved on 2011-06-22]

## Description

### Field of the invention

The invention relates to a method for wireless communication using almost blank subframes, and a base station and a device for wireless communication adapted to perform said method.

### Background

In heterogeneous network (HetNet) scenarios using standards like e.g. Third Generation Partnership Project Long Term Evolution (3GPP LTE) standard, so-called pico base stations with their pico cells are placed under the coverage of a so-called macro base station. Both, macro and pico cell subsystems, use the same carrier frequency/frequencies. A pico base station typically covers a small area e.g. in buildings, train stations or aircrafts or outside due to its lower power, whereas a macro base station covers a larger area than a pico base station, as e.g. an outdoor area. Pico base stations enable a densification of cellular wireless networks, by adding additional capacity to places where it is needed.

In most cases so-called cell range extension is applied to the pico cells in order to increase the number of user terminals that benefit from the additional bandwidth that is offered by these pico cells. In order to push more user terminals into a pico cell, a so called handover bias value is introduced that pushes user terminals served by a macro base station into the pico cell although the pico cell receive signal level is below the macro cell receive signal level. For these new pico cell border user terminals inter-cell interference coordination is required in order to support cell border user terminals in the pico cell. Enhanced inter-cell interference coordination (eICIC) is the most common and standardized interference coordination scheme in LTE Advanced. It is based on a periodical almost blank subframe (ABS) pattern where the macro cell does not use a predefined subset of subframes for data traffic out of a number of subsequent subframes.

3GPP LTE Release 10 introduces said so-called enhanced inter-cell interference-coordination (eICIC) for performance improvements in heterogeneous networks. eICIC is a time domain ICIC concept based on subframe blanking. Thereby macro enhanced NodeBs (eNBs), i.e. macro base stations, send a pattern of so-called almost blank subframes (ABS), which only contains so-called pilots and common control information but no data. This results in a reduced interference in ABS for user terminals served by a pico base station. To enable the pico base station scheduler to exploit the varying interference situation in ABS and non ABS, 3GPP Release 10 enables user terminals to provide up to two separate Channel Quality Indicator (CQI) values for separate subsets of subframes. In other words, 3GPP LTE Release 10 mobiles support eICIC by Channel Qualitiy Indicator (CQI) measurements that consider only the ABS or only the non ABS. In principle, an LTE Rel. 10 user terminal can send two different CQI measurements during one measurement period: One that is valid for ABS and another one that is valid for non ABS. Therefore the pico base station sends a CQI-Report Information Element (IE) to each user terminal. The CQI-Report Information Element (IE) contains the so-called two bit string csi-MeasSubframeSet1-r10, i.e. a first subframe set 1, and the so-called csi-MeasSubframeSet2-r10, i.e. a second subframe set 2. In case of an FDD system (FDD = Frequency Division Duplex), each of the subframe sets has a size of 40 subframes. Each of the subframe sets defines the subframes in a 40ms period which should be considered for the measurements of one of the two CQI values. To provide separate CQI values for ABS and non ABS one of the subframe sets will contain all ABS and the other will contain all non ABS.
3GPP workgroup1-document R1-121947 entitled "Interference measurement resource configuration and CQI calculation" describes a method of interference measurement using Interference Measurement Resources (IMR) that can be configured for a Release 11
user equipment (UE). To support Release-10 resource restricted measurement, a first IMR may be configured to the UE by a serving pico cell for measuring the interference condition while an interfering macrocell is instructed to transmit, and a second IMR may be configured to the UE by the serving pico cell for measuring the interference condition while an interfering macrocell is instructed to mute.

### Summary

According to the present invention, a method as set forth in claim 1 and a communication network as set forth in claim 8 are provided. Embodiments of the invention are claimed in the dependent claims. In case of load changes in the pico or macro cell, a reconfiguration of the ABS pattern may be necessary. However, this reconfiguration is very slow and resource consuming, as it requires the pico cell to reconfigure the CQI measurement of every single user terminal.

The best existing solution is to keep the ABS pattern for a longer period of time and to rarely use reconfiguration of ABS and CQI measurement by Radio Resource Management (RRM) layer to limit processing load on the pico base station, as for an ABS reconfiguration a dedicated Radio Resource Control (RRC) message for each user terminal has to be generated. In addition the RRC message is transmitted within an acknowledged Radio Link Control (RLC) mode leading to an increase of the air interface load by an initial transmission, Hybrid Automatic Repeat Request (HARQ) and RLC retransmissions.

The object of the invention is thus to propose a method for wireless communication using almost blank subframes which allows for channel quality measurements of almost blank subframes and non almost blank subframes and at the same times offers the possibility for a quick reconfiguration of an ABS pattern used by a macro base station with a low resource usage on the air interface.

A basic idea of embodiments of the invention is to divide a channel quality measurement period in more than two subperiods:
- a first subperiod for channel quality measurements during ABS,
- a second subperiod for channel quality measurements during non ABS,
- and a third subperiod that is not considered for channel quality measurements.

The third subperiod can be used for a quick reconfiguration of an ABS pattern without changing the channel quality measurement patterns of user terminals.

The pico base station configures user terminals for channel quality measurements during ABS in the first subperiod, and for channel quality measurements during non ABS in the second subperiod. Furthermore, the pico base station modifies the third subperiod for optimal ABS setting without transmitting this new information towards the user terminals. In other words, the amount of almost blank subframes in the third subperiod can be quickly modified, e.g. dependent on the load in the pico cell, without the need to change the first and second subperiods in which channel quality measurements are performed.

The invention can however also be applied for user terminals served by the macro base station. In this case, the macro base station configures user terminals only for channel quality measurements during non ABS in the second subperiod, as the macro base station will not serve user terminals during ABS.

If an optimal or at least appropriate ABS setting cannot be achieved, a reconfiguration of the first and second subperiod will be applied, which again will be stable for a longer time.

The object is thus achieved by a method for wireless communication using almost blank subframes in a communication network comprising a macro base station, a pico base station, and a user terminal, wherein a channel quality measurement period is divided into at least three subperiods, the method comprising:
- transmitting only almost blank subframes during a first subperiod of said at least three subperiods;
- transmitting only non almost blank subframes during a second subperiod of said at least three subperiods;
- transmitting almost blank subframes and non almost blank subframes with a variable ratio of almost blank subframes to non almost blank subframes during a third subperiod of said at least three subperiods;
- receiving load information from the pico cell, the load information being determined based on the overall throughput of the user terminals served by the pico base station, after receiving, at the pico base station channel quality measurements during performed by the user terminal during the first subperiod of said at least three subperiods and during said second subperiod of said at least three subperiods;
- changing said variable ratio of almost blank subframes to non almost blank subframes during said third subperiod of said at least three subperiods based on the load information as received; and
- transmitting, by the macro base station, notification about used almost blank subframe pattern to the pico base station.

The object of the invention is furthermore achieved by a communication network for wireless communication using almost blank subframes as defined by independent claim 8.

The invention is described in the following within the framework of 3GPP LTE, however as the invention is not restricted to 3GPP LTE, but can in principle be applied in other networks in which the basics of almost blank subframes can be used, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows exemplarily a channel quality measurement period which is divided into three subperiods according to embodiments of the invention.
Fig. 4 schematically shows a message sequence chart for performing a wireless communication between a macro base station, a pico base station and a user terminal using almost blank subframes according to an embodiment of the invention.

### Description of the embodiments

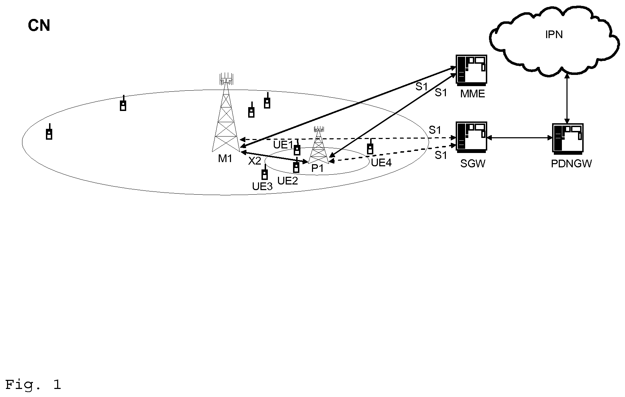

Fig. 1 shows as an example of a communication network in which the invention can be implemented a communication network CN according to the standard 3GPP LTE.

Said communication network CN comprises a macro base station M1, a pico base station P1, user terminals UE1-UE4, a serving gateway SGW, a packet data network gateway PDNGW, and a mobility management entity MME.

The user terminals UE1 and UE2 are connected via radio connections to the pico base station P1, and the user terminals UE3 and UE4 are connected via radio connections to the macro base stations M1. In future evolutions of LTE, each of the user terminals UE3 and UE4 could also be connected via radio connections to multiple macro base stations. The macro base station M1 is in turn connected to the serving gateway SGW and to the mobility management entity MME, i.e. to the evolved packet core (EPC), via the so-called S1 interface. In the same way, the pico base station P1 is connected to the serving gateway SGW and to the mobility management entity MME.

The macro base station M1 and the pico base station P1 are connected among each other via the so-called X2 interface. The macro base station M1 and the pico base station P1 can be connected among each other via radio connections or via fixed line connections.

The serving gateway SGW is connected to the packet data network gateway PDNGW, which is in turn connected to an external IP network IPN.

The S1 interface is a standardized interface between the macro base station M1 or the pico base station P1, i.e. an eNodeB in this example, and the Evolved Packet Core (EPC). The S1 interface has two flavours, S1-MME for exchange of signalling messages between one of the macro or pico base station M1, P1 and the mobility management entity MME and S1-U for the transport of user datagrams between one of the macro or pico base station M1, P1 and the serving gateway SGW.

The X2 interface is added in 3GPP LTE standard primarily in order to transfer the user plane signal and the control plane signal during handover.

The serving gateway SGW performs routing of the IP user data between the macro base station M1 and the pico base station P1 respectively, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal UE1-UE4 and the respective serving macro base station M1 or pico base station P1.

The mobility management entity MME performs tasks of the subscriber management and the session management, and also performs the mobility management during handover between different access networks.

The pico base station P1 and the related coverage area of the pico cell is placed under the coverage area of the macro base station M1. Thus, the downlink transmission from the macro base station M1 is the dominating source of interference on the downlink transmission to the user terminals UE1 and UE2 served by the pico base station P1.

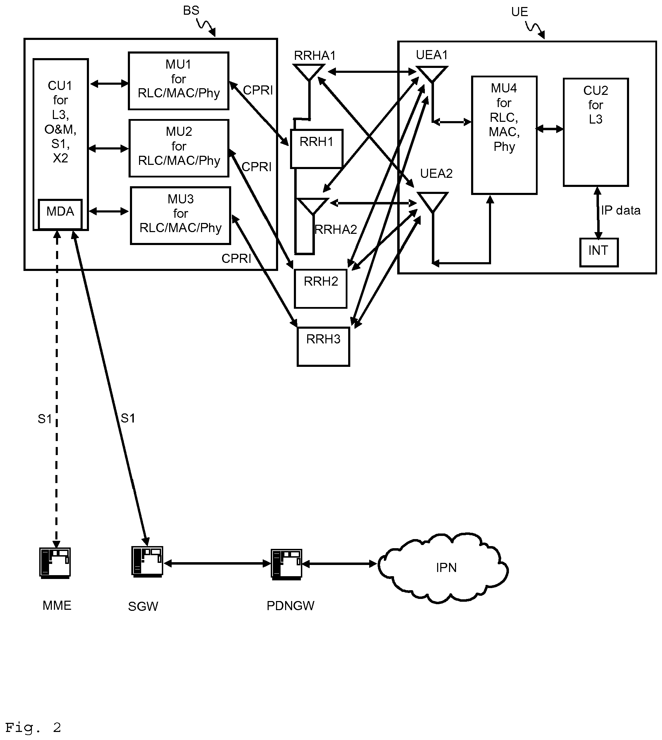

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

As already mentioned above, 3GPP LTE Release 10 introduces so-called enhanced inter-cell interference-coordination (eICIC) for performance improvements in heterogeneous networks, which is based on subframe blanking, i.e. macro base stations send a pattern of so-called almost blank subframes (ABS), which only contains so-called pilots and common control information but no data. This results in a reduced interference in ABS for user terminals served by a pico base station. To enable the pico base station scheduler to exploit the varying interference situation in ABS and non ABS, 3GPP Release 10 enables user terminals to provide up to two separate Channel Quality Indicator (CQI) values for separate subsets of subframes. To provide separate CQI values for ABS and non ABS one of the subframe sets will contain all ABS and the other will contain all non ABS.

The object of the invention is to propose a method for wireless communication using almost blank subframes which allows for channel quality measurements of almost blank subframes and non almost blank subframes and at the same times offers the possibility for a quick reconfiguration of an ABS pattern used by a macro base station with a low resource usage on the air interface.

A basic idea of embodiments of the invention is to divide a channel quality measurement period in more than two subperiods, which will be described in the following in more detail.

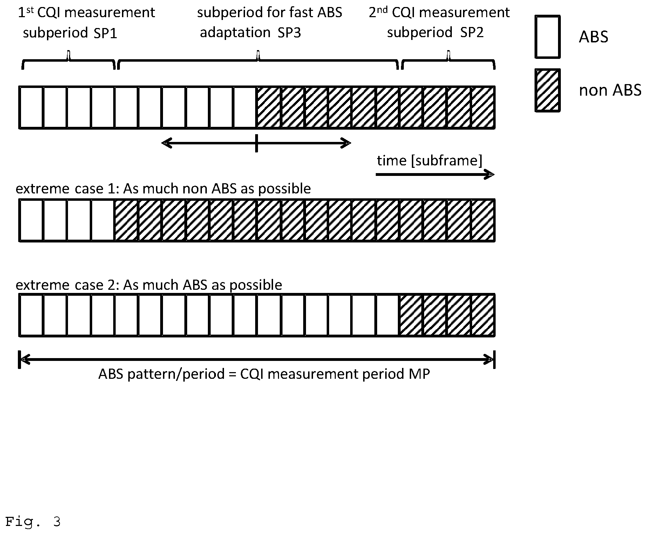

Fig. 3 schematically shows exemplarily such a channel quality measurement period which is divided into three subperiods according to embodiments of the invention.

In fig. 3, a CQI measurement period MP of a user terminal served by a pico base station, as e.g. the user terminal UE1 served by the pico base station P1 as depicted in fig. 1, is shown. The CQI measurement period MP in the example consists of 20 subframes, and corresponds to a period of an ABS pattern used by a macro base station which coverage area comprises the coverage area of the pico base station, as e.g. the macro base station M1 depicted in fig. 1.

The CQI measurement period MP is divided into a first subperiod SP1 for CQI measurements of almost blank subframes, a second subperiod SP2 for CQI measurements of non almost blank subframes, and a third subperiod SP3 during which the user terminal UE1 does not perform CQI measurements. Thus, the first subperiod SP1 comprises subframes in which the surrounding macro cell sends ABS, and the second subperiod SP2 comprises subframes in which the surrounding macro cell sends non ABS.

According to an embodiment of the invention, the pico base station P1 defines the first and the second subperiod SP1 and SP2, each comprising only a subset of ABS and non ABS respectively.

In the example depicted in fig. 3, the first subperiod SP1 comprises the first 4 subframes, and the second subperiod SP2 comprises the last 4 subframes. The 12 subframes between the first and the second subperiod SP1 and SP2 belong to the third subperiod SP3. However, said used ABS pattern comprising 20 subframes is just an example which is not limiting the embodiments according to the invention. In 3GPP LTE, there has e.g. been defined an ABS pattern comprising 40 subframes.

During the first subperiod SP1, the macro base station M1 only transmits almost blank subframes, and during the second subperiod SP2, the macro base station M1 only transmits non almost blank subframes.

During the third subperiod SP3, the macro base station M1 transmits almost blank subframes and non almost blank subframes in a variable ratio of almost blank subframes to non almost blank subframes. Thus, the third subperiod SP3 can be used for a quick reconfiguration of an ABS ratio without changing the user terminal's CQI measurement patterns, i.e. without changing the first and the second subperiod SP1 and SP2. The number of ABS in subperiod SP3 can e.g. be increased if the load in the pico cell increases or if the number of user terminals served in the pico cell increases.

In the first row of fig. 3 an average ABS pattern with 4 almost blank subframes and 4 non almost blank subframes in the third subperiod SP3 is shown.

If the load in the pico cell is low, or if the number of user terminals served in the pico cell is low, then the number of ABS in the third subperiod SP3 can be reduced to zero, i.e. only non ABS are transmitted in the third subperiod SP3. Such an extreme case is depicted in the second row of fig. 3. In summary, in this case, out of the 20 subframes of the CQI measurement period MP, only the 4 subframes in the first subperiod SP1 are ABS.

If the load in the pico cell is high, or if the number of user terminals served in the pico cell is high, then the number of ABS in the third subperiod SP3 can be increased to 12, i.e. only ABS are transmitted in the third subperiod SP3. Such an extreme case is depicted in the third row of fig. 3. In summary, in this case, out of the 20 subframes of the CQI measurement period MP, only the 4 subframes in the second subperiod SP1 are non ABS, and all the remaining 16 subframes are ABS.

Thus, without the need to change the measurements patterns, i.e. the first and the second subperiods SP1 and SP2, the number of ABS in the CQI measurement period MP can be varied from 4 to 16.

In case of a convenient definition of the measurement ranges in the pico cell represented by the first and the second subperiods SP1 and SP2, the macro base station M1 can easily change the percentage of ABS, which also defines the percentage of non ABS, and inform the pico cell about the new ABS pattern. This change will then be applied by the scheduler of the pico base station P1 in the third subperiod SP3 without the need to reconfigure the CQI measurement pattern, i.e. the first and second subperiods SP1 and SP2, of all the user terminals served by the pico base station P1.

3GPP LTE Release 10 enables a base station to inform other base stations about the ABS pattern it applies. Therefor, a base station sends a message called "LOAD INFORMATION" which includes an ABS Information Element (IE) via the X2 interface to the other base stations. In general this mechanism is used by macro base stations, as e.g. macro base station M1 in fig. 1, to inform its pico base stations, as e.g. pico base station P1 in fig. 1, about the applied ABS pattern. The ABS pattern in a macro base station may be statically configured, e.g. by Operation and Maintenance (O&M), or it may be dynamically adapted by Self Optimized Network (SON) mechanisms. If the ABS pattern of a macro base station is changed, the macro base station will send a new ABS Information IE to the pico base stations. Based on the received information about the ABS pattern of a macro base station M1, the pico base station P1 can determine an appropriate third subperiod SP3 as described above.

Only if the number of ABS per CQI measurement period MP defined by a macro base station does not lie within this range from 4 to 16 ABS, a reconfiguration of at least one of the first and second subperiods SP1 and SP2 will be applied, which again will be stable for a longer time, and the user terminals served by the pico base station P1, as e.g. the user terminal UE1, will be informed by the pico base station P1 about the new measurement patterns, i.e. new first and second subperiods SP1 and SP2. Thus, in case that more than 16 ABS are defined by the macro base station M1, the second subperiod SP2 has to be decreased. Thus, in case that less than 4 ABS are defined by the macro base station M1, the first subperiod SP1 has to be decreased.

Furthermore, in case that a more accurate CQI value is needed, the first and second subperiods SP1 and SP2 can be increased, which however in turn decreases the region for possible ABS patterns, i.e. decreases possible ABS percentages.

Fig. 3 only shows a logical picture of ABS and non ABS regions. The subframes of these regions do not necessarily have to be adjacent. However, the measurement subperiods SP1 and SP2 preferably are valid for a high possible number of ABS patterns, i.e. CQI measurement periods MP. Consequently, the measurement regions, i.e. the subperiods SP1 and SP2, have to cover pure ABSs or non ABSs even for the extreme cases of ABS patterns with highest or lowest percentage of ABS.

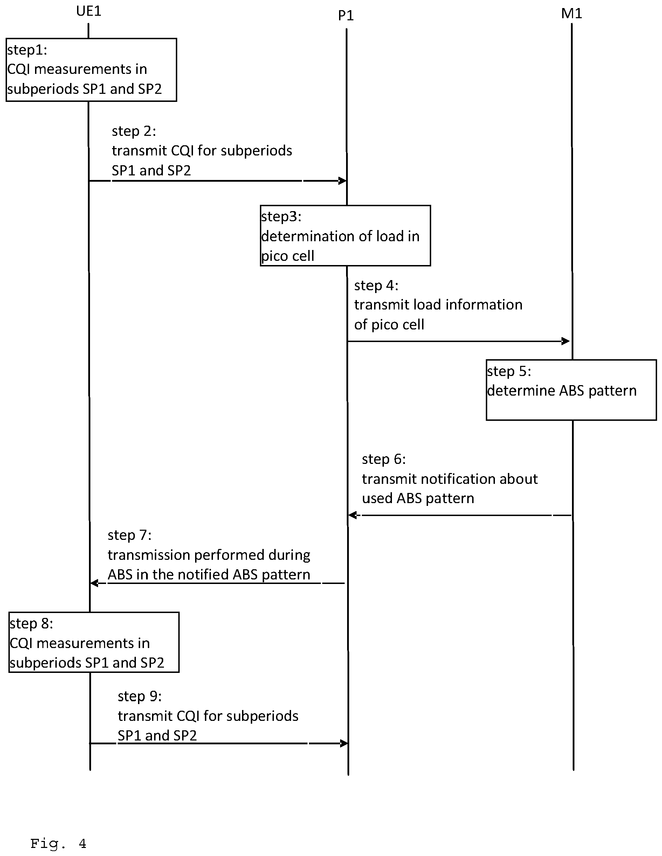

Fig. 4 schematically shows a message sequence chart for performing a wireless communication between a macro base station, a pico base station and a user terminal served by the pico base station P1, as e.g. the macro base station M1, the pico base station P1 and the user terminal UE1 in fig. 1, using almost blank subframes according to the embodiment of the invention depicted in fig. 3 and described above.

In step 1, the user terminal UE1 performs CQI measurements of almost blank subframes in the first subperiod SP1 and of non almost blank subframes in the second subperiod SP2 as e.g. depicted in fig. 3. The first and second subperiod SP1 and SP2 are defined by the pico base station P1 based on an ABS pattern used by the macro base station M1. Therefor, the macro base station M1 informs the pico base station P1 about the used ABS pattern.

In step 2, the user terminal UE1 sends a CQI both for the first subperiod SP1 and for the second subperiod SP2 to the pico base station P1. Thus, the pico base station P1 has knowledge about the channel quality during ABS and during non ABS.

In step 3, the pico base station P1 determines a load in the pico cell based on the overall data throughput of the user terminals served by the pico base station P1.

In step 4, the pico base station P1 transmits to the macro base station M1 information about the load in the pico cell.

In step 5, based on the load in the pico cell, based on the number of served user terminals in the pico cell, or based on a load in the macro cell, the macro base station M1 calculates the number of ABS needed in the ABS pattern of the macro base station M1 e.g. if the channel quality during non ABS is not acceptable. As the pico base station P1 should avoid to change first and second subperiod SP1 and SP2, it will try to find an appropriate ABS pattern or more general an appropriate ABS ratio with changes in the number of ABS only in the third subperiod SP3.

In step 6, the macro base station M1 transmits a notification about the used ABS pattern to the pico base station P1. If possible the used ABS pattern provides enough ABS for the pico base station P1 to handle the load in the pico cell.

In step 7, the pico base station P1 transmits control and user data to the user terminal UE1 during ABS in the notified ABS pattern of the macro base station M1. If the first and the second subperiod SP1 and SP2 in the ABS pattern have not been changed, then no further signaling regarding the first and the second subperiod SP1 and SP2 to the user terminal UE1 is necessary.

In step 8, the user terminal UE1 again performs CQI measurements of almost blank subframes in the first subperiod SP1 and of non almost blank subframes in the second subperiod SP2 as e.g. depicted in fig. 3.

In step 9, the user terminal UE1 again sends a CQI both for the first subperiod SP1 and for the second subperiod SP2 to the pico base station P1. Thus, the pico base station P1 has knowledge about the channel quality during ABS and during non ABS.

In an analogue way, a wireless communication between the macro base station M1, and the user terminal UE3 in fig. 1 served by the macro base station M1, using almost blank subframes according to the embodiment of the invention depicted in fig. 3 and described above can be performed. In this case, the macro base station M1 configures the user terminal UE3 only for channel quality measurements during non ABS in the second subperiod SP2, as the macro base station M1 will not serve user terminals during ABS. Thus, the user terminal UE3 sends a CQI only for the second subperiod SP2 to the macro base station M1.

In the embodiments described above, the CQI measurements of almost blank subframes and of non almost blank subframes is performed by a user terminal served by a pico base station. However, in further embodiments of the invention, said CQI measurements of almost blank subframes and of non almost blank subframes can be performed by a further adjacent pico base station and can be fed back to the pico base station. The pico base station can then use the CQI measurements of almost blank subframes and of non almost blank subframes performed by the further adjacent pico base station to estimate the CQI values for user terminals which are served by the pico base station.

In the embodiments described above and depicted e.g. in figs. 3 and 4, the corresponding processing steps can be performed e.g. in the modem unit boards MU1-MU3 and the control unit board CU1 of the macro base station M1 and the pico base station P1, and in the modem unit board MU4 and the control unit board CU2 of the user terminal UE1 as depicted in fig. 2 and described above.

## Claims

1. A method for wireless communication using almost blank subframes carried out by a communication network comprising a macro base station (M1), a pico base station (P1), and a user terminal (UE1), wherein a channel quality measurement period (MP) is divided into at least three subperiods (SP1, SP2, SP3), the method comprising:
• transmitting, by the macro base station (M1), only almost blank subframes during a first subperiod (SP1) of said at least three subperiods (SP1, SP2, SP3) ; **characterized by**
• transmitting, by the macro base station (M1), only non almost blank subframes during a second subperiod (SP2) of said at least three subperiods (SP1, SP2, SP3) ; transmitting, by the macro base station (M1), almost blank subframes and non almost blank subframes with a variable ratio of almost blank subframes to non almost blank subframes during a third subperiod (SP3) of said at least three subperiods (SP1, SP2, SP3); and
• receiving, by the macro base station (M1), load information from the pico cell, the load information being determined based on the overall throughput of the user terminals served by the pico base station (P1), after receiving, at the pico base station (P1) channel quality measurements performed by the user terminal (UE1) during the first subperiod (SP1) of said at least three subperiods (SP1, SP2, SP3) and during said second subperiod (SP2) of said at least three subperiods (SP1, SP2, SP3);
• changing, by the macro base station (M1), said variable ratio of almost blank subframes to non almost blank subframes during said third subperiod (SP3) of said at least three subperiods (SP1, SP2, SP3) based on the load information as received; and
• transmitting, by the macro base station (M1), notification about used almost blank subframe pattern to the pico base station (P1).

2. The method according to claim 1, wherein changing the variable ratio of almost blank subframes to non almost blank subframes is performed without changing the first and second subperiods (SP1, SP2) of said at least three subperiods (SP1, SP2, SP3) .

3. The method according to claim 1 or 2, wherein changing the variable ratio of almost blank subframes to non almost blank subframes is further based on a number of wireless devices served by the pico base station.

4. A method according to any of the claims 1-3, further comprising increasing at least one of the first subperiod (SP1) and the second subperiod (SP2) of said at least three subperiods (SP1, SP2, SP3) if a more accurate channel quality is required.

5. A method according to any of the claims 1-3, further comprising decreasing the second subperiod (SP2) of said at least three subperiods (SP1, SP2, SP3) if a higher number of almost blank subframes than offered by the first and third subperiod (SP1, SP3) together is required by a pico base station (P1).

6. A method according to any of the claims 1-3, further comprising decreasing the first subperiod (SP1) of said at least three subperiods (SP1, SP2, SP3) if a lower number of almost blank subframes than offered by the current first subperiod (SP1) is required by a pico base station (P1)

7. A method according to any of the preceding claims, wherein at least one of the first subperiod (SP1) and the second subperiod (SP2) of said at least three subperiods (SP1, SP2, SP3) comprises non adjacent subframes.

8. A communication network for wireless communication using almost blank subframes comprising a macro base station (M1), a pico base station (P1), and a user terminal (UE1), wherein a channel quality measurement period (MP) is divided into at least three subperiods (SP1, SP2, SP3), wherein the macro base station (M1) comprises:
• means adapted to transmit only almost blank subframes during a first subperiod (SP1) of said at least three subperiods (SP1, SP2, SP3); **characterized by**
• means adapted to transmit only non almost blank subframes during a second subperiod (SP2) of said at least three subperiods (SP1, SP2, SP3);
• means adapted to transmit almost blank subframes and non almost blank subframes with a variable ratio of almost blank subframes to non almost blank subframes during a third subperiod (SP3) of said at least three subperiods (SP1, SP2, SP3);
• means adapted to receive load information from the pico cell, the load information being determined based on the overall throughput of the user terminals served by the pico base station (P1), after receiving, at the pico base station (P1) channel quality measurements performed by the user terminal (UE1) during the first subperiod (SP1) of said at least three subperiods (SP1, SP2, SP3) and during said second subperiod (SP2) of said at least three subperiods (SP1, SP2, SP3);
• means adapted to change said variable ratio of almost blank subframes to non almost blank subframes during said third subperiod (SP3) of said at least three subperiods (SP1, SP2, SP3) based on the load information as received; and
• means adapted to transmit notification about used almost blank subframe pattern to the pico base station (P1).

9. A communication network according to claim 8, wherein the user terminal (UE1) is configured to perform channel quality measurements during the first subperiod (SP1) of said at least three subperiods (SP1, SP2, SP3) and during said second subperiod (SP2) of said at least three subperiods (SP1, SP2, SP3) and to transmit the channel measurements to the pico base station (P1).

## Patentansprüche

1. Verfahren zur drahtlosen Kommunikation unter Verwendung von fast leeren Unterrahmen, die durch ein Kommunikationsnetzwerk ausgeführt werden, umfassend eine Makro-Basisstation (M1), eine Pico-Basisstation (P1) und ein Benutzer-Endgerät (UE1), wobei ein Kanalqualitäts-Messzeitraum (MP) unterteilt ist in mindestens drei Unterzeiträume (SP1, SP2, SP3), wobei das Verfahren umfasst:
• Übertragen durch die Makro-Basisstation (M1) von nur fast leeren Unterrahmen während eines ersten Unterzeitraums (SP1) von besagten mindestens drei Unterzeiträumen (SP1, SP2, SP3);
**gekennzeichnet durch** das
• Übertragen durch die Makro-Basisstation (M1) von nur nicht fast leeren Unterrahmen während eines zweiten Unterzeitraums (SP2) von besagten mindestens drei Unterzeiträumen (SP1, SP2, SP3); Übertragen, durch die Makro-Basisstation (M1) von fast leeren Unterrahmen und nicht fast leeren Unterrahmen mit einem variablen Verhältnis von fast leeren Unterrahmen zu nicht fast leeren Unterrahmen während eines dritten Unterzeitraums (SP3) von besagten mindestens drei Unterzeiträumen (SP1, SP2, SP3); und
• Empfangen durch die Makro-Basisstation (M1) von Lastinformation von der Pico-Zelle, wobei die Lastinformation bestimmt wird beruhend auf dem Gesamtdurchsatz der von der Pico-Basisstation (P1) bedienten Benutzer-Endgeräte, nach dem Empfangen an der Pico-Basisstation (P1) von Kanalqualitätsmessungen, die durch das Benutzer-Endgerät (UE1) während des ersten Unterzeitraums (SP1) von besagten mindestens drei Unterzeiträumen (SP1, SP2, SP3) und während des besagten zweiten Unterzeitraums (SP2) von besagten mindestens drei Unterzeiträumen (SP1, SP2, SP3) durchgeführt worden sind;
• Ändern durch die Makro-Basisstation (M1) von besagtem variablen Verhältnis von fast leeren Unterrahmen zu nicht fast leeren Unterrahmen während des besagten dritten Unterzeitraums (SP3) von besagten mindestens drei Unterzeiträumen (SP1, SP2, SP3), beruhend auf der empfangenen Lastinformation; und
• Übertragen durch die Makro-Basisstation (M1) einer Benachrichtigung über ein verwendetes fast leeres Unterrahmen-Muster an die Pico-Basisstation (P1).

2. Verfahren nach Anspruch 1, wobei das Ändern des variablen Verhältnisses von fast leeren Unterrahmen zu nicht fast leeren Unterrahmen ohne Änderung der ersten und zweiten Unterzeiträume (SP1, SP2) von besagten mindestens drei Unterzeiträumen (SP1, SP2, SP3) durchgeführt wird.

3. Verfahren nach Anspruch 1 oder 2, wobei das Ändern des variablen Verhältnisses von fast leeren Unterrahmen zu nicht fast leeren Unterrahmen ferner beruht auf einer Anzahl von drahtlosen Vorrichtungen, die von der Pico-Basisstation bedient werden.

4. Verfahren nach einem der Ansprüche 1-3, ferner umfassend das Erhöhen von mindestens dem ersten Unterzeitraum (SP1) und/oder dem zweiten Unterzeitraum (SP2) von besagten mindestens drei Unterzeiträumen (SP1, SP2, SP3), wenn eine genauere Kanalqualität erforderlich ist.

5. Verfahren nach einem der Ansprüche 1-3, ferner umfassend das Verringern des zweiten Unterzeitraums (SP2) von besagten mindestens drei Unterzeiträumen (SP1, SP2, SP3), wenn eine höhere Anzahl von fast leeren Unterrahmen von einer Pico-Basisstation (P1) benötigt wird, als die zusammen von dem ersten und dritten Unterzeitraum (SP1, SP3) angebotene Anzahl.

6. Verfahren nach einem der Ansprüche 1-3, ferner umfassend das Verringern des ersten Unterzeitraums (SP1) von besagten mindestens drei Unterzeiträumen (SP1, SP2, SP3), wenn eine geringere Anzahl von fast leeren Unterrahmen von einer Pico-Basisstation (P1) benötigt wird, als die von dem aktuellen ersten Unterzeitraum (SP1) angebotene Anzahl.

7. Verfahren nach einem beliebigen der vorstehenden Ansprüche, wobei mindestens der erste Unterzeitraum (SP1) und/oder der zweite Unterzeitraum (SP2) von besagten mindestens drei Unterzeiträumen (SP1, SP2, SP3) nicht benachbarte Unterzeiträume umfassen.

8. Kommunikationsnetzwerk zur drahtlosen Kommunikation unter Verwendung von fast leeren Unterrahmen, umfassend eine Makro-Basisstation (M1), eine Pico-Basisstation (P1) und ein Benutzer-Endgerät (UE1), wobei ein Kanalqualitäts-Messzeitraum (MP) unterteilt ist in mindestens drei Unterzeiträume (SP1, SP2, SP3), wobei die Makro-Basisstation (M1) umfasst:
• Mittel, die angepasst sind zum Übertragen von nur fast leeren Unterrahmen während eines ersten Unterzeitraums (SP1) von besagten mindestens drei Unterzeiträumen (SP1, SP2, SP3);
**dadurch gekennzeichnet, dass**
• Mittel angepasst sind zum Übertragen von nur nicht fast leeren Unterrahmen während eines zweiten Unterzeitraums (SP2) von besagten mindestens drei Unterzeiträumen (SP1, SP2, SP3);
• Mittel, die angepasst sind zum Übertragen von nicht fast leeren Unterrahmen mit einem variablen Verhältnis von fast leeren Unterrahmen zu nicht fast leeren Unterrahmen während eines dritten Unterzeitraums (SP3) von besagten mindestens drei Unterzeiträumen (SP1, SP2, SP3);
• Mittel, die angepasst sind zum Empfangen von Lastinformation von der Pico-Zelle, wobei die Lastinformation bestimmt wird beruhend auf dem Gesamtdurchsatz der von der Pico-Basisstation (P1) bedienten Benutzer-Endgeräte, nach dem Empfangen an der Pico-Basisstation (P1) von Kanalqualitätsmessungen, die durch das Benutzer-Endgerät (UE1) während des ersten Unterzeitraums (SP1) von besagten mindestens drei Unterzeiträumen (SP1, SP2, SP3) und während des besagten zweiten Unterzeitraums (SP2) von besagten mindestens drei Unterzeiträumen (SP1, SP2, SP3) durchgeführt worden sind;
• Mittel, die angepasst sind zum Ändern von besagtem variablen Verhältnis von fast leeren Unterrahmen zu nicht fast leeren Unterrahmen während des besagten dritten Unterzeitraums (SP3) von besagten mindestens drei Unterzeiträumen (SP1, SP2, SP3), beruhend auf der empfangenen Lastinformation; und
• Mittel, die angepasst sind zum Übertragen einer Benachrichtigung über ein verwendetes fast leeres Unterrahmen-Muster an die Pico-Basisstation (P1).

9. Kommunikationsnetzwerk nach Anspruch 8, wobei das Benutzer-Endgerät (UE1) konfiguriert ist zum Durchführen von Kanalqualitätsmessungen während des ersten Unterzeitraums (SP1) von besagten mindestens drei Unterzeiträumen (SP1, SP2, SP3) und während des besagten zweiten Unterzeitraums (SP2) von besagten mindestens drei Unterzeiträumen (SP1, SP2, SP3) und zum Übertragen der Kanalmessungen an die Pico-Basisstation (P1).

## Revendications

1. Procédé de communication sans fil utilisant des sous-trames presque vides exécuté par un réseau de communication comprenant une macro station de base (M1), une pico station de base (P1) et un terminal utilisateur (UE1), dans lequel une période de mesure (MP) de qualité de canal est divisée en au moins trois sous-périodes (SP1, SP2, SP3), le procédé comprenant les étapes suivantes :
• transmettre, au moyen de la macro station de base (M1), uniquement des sous-trames presque vides durant une première sous-période (SP1) parmi lesdites au moins trois sous-périodes (SP1, SP2, SP3) ;
**caractérisé par** les étapes suivantes
• transmettre, au moyen de la macro station de base (M1), uniquement des sous-trames non presque vides durant une deuxième sous-période (SP2) parmi lesdites au moins trois sous-périodes (SP1, SP2, SP3) ; transmettre, au moyen de la macro station de base (M1), des sous-trames presque vides et des sous-trames non presque vides selon un rapport variable entre les sous-trames presque vides et les sous-trames non presque vides durant une troisième sous-période (SP3) parmi lesdites au moins trois sous-périodes (SP1, SP2, SP3) ; et
• recevoir au moyen de la macro station de base (M1), des informations de charge provenant de la picocellule, les informations de charge étant déterminées sur la base du débit global des terminaux utilisateurs desservis par la pico station de base (P1), après la réception, au niveau de la pico station de base (P1) de mesures de qualité de canal exécutées par le terminal utilisateur (UE1) durant la première sous-période (SP1) parmi lesdites au moins trois sous-périodes (SP1, SP2, SP3) et durant ladite deuxième sous-période (SP2) parmi lesdites au moins trois sous-périodes (SP1, SP2, SP3) ;
• changer, au moyen de la macro station de base (M1), ledit rapport variable entre les sous-trames presque vides et les sous-trames non presque vides durant ladite troisième sous-période (SP3) parmi lesdites au moins trois sous-périodes (SP1, SP2, SP3) sur la base des informations de charge telles que reçues ; et
• transmettre, au moyen de la macro station de base (M1), une notification à propos d'un motif de sous-trame presque vide utilisé à la pico station de base (P1).

2. Procédé selon la revendication 1, dans lequel le changement du rapport variable entre les sous-trames presque vides et les sous-trames non presque vides est exécuté sans changer les première et deuxième sous-périodes (SP1, SP2) parmi lesdites au moins trois sous-périodes (SP1, SP2, SP3)

3. Procédé selon la revendication 1 ou 2, dans lequel le changement du rapport variable entre les sous-trames presque vides et les sous-trames non presque vides est en outre basé sur un nombre de dispositifs sans fil desservis par la pico station de base.

4. Procédé selon l'une quelconque des revendications 1 à 3, comprenant en outre l'augmentation de la première sous-période (SP1) et/ou de la deuxième sous-période (SP2) parmi lesdites au moins trois sous-périodes (SP1, SP2, SP3) si une qualité de canal plus précise est requise.

5. Procédé selon l'une quelconque des revendications 1 à 3, comprenant en outre la diminution de la deuxième sous-période (SP2) parmi lesdites au moins trois sous-périodes (SP1, SP2, SP3) si un nombre de sous-trames presque vides supérieur à celui offert par la première et la troisième sous-périodes (SP1, SP3) ensemble est requis par une pico station de base (P1).

6. Procédé selon l'une quelconque des revendications 1 à 3, comprenant en outre la diminution de la première sous-période (SP1) parmi lesdites au moins trois sous-périodes (SP1, SP2, SP3) si un nombre de sous-trames presque vides inférieur à celui offert par la première sous-période actuelle (SP1) est requis par une pico station de base (P1).

7. Procédé selon l'une quelconque des revendications précédentes, dans lequel la première sous-période (SP1) et/ou la deuxième sous-période (SP2) parmi lesdites au moins trois sous-périodes (SP1, SP2, SP3) comprend des sous-trames non adjacentes.

8. Réseau de communication pour une communication sans fil utilisant des sous-trames presque vides comprenant une macro station de base (M1), une pico station de base (P1) et un terminal utilisateur (UE1), dans lequel une période de mesure (MP) de qualité de canal est divisée en au moins trois sous-périodes (SP1, SP2, SP3), dans lequel la macro station de base (M1) comprend :
• des moyens adaptés pour transmettre uniquement des sous-trames presque vides durant une première sous-période (SP1) parmi lesdites au moins trois sous-périodes (SP1, SP2, SP3) ;
**caractérisé par**
• des moyens adaptés pour transmettre uniquement des sous-trames non presque vides durant une deuxième sous-période (SP2) parmi lesdites au moins trois sous-périodes (SP1, SP2, SP3) ;
• des moyens adaptés pour transmettre des sous-trames presque vides et des sous-trames non presque vides selon un rapport variable entre les sous-trames presque vides et les sous-trames non presque vides durant une troisième sous-période (SP3) parmi lesdites au moins trois sous-périodes (SP1, SP2, SP3) ;
• des moyens adaptés pour recevoir des informations de charge provenant de la picocellule, les informations de charge étant déterminées sur la base du débit global des terminaux utilisateurs desservis par la pico station de base (P1), après la réception, au niveau de la pico station de base (P1) de mesures de qualité de canal exécutées par le terminal utilisateur (UE1) durant la première sous-période (SP1) parmi lesdites au moins trois sous-périodes (SP1, SP2, SP3) et durant ladite deuxième sous-période (SP2) parmi lesdites au moins trois sous-périodes (SP1, SP2, SP3) ;
• des moyens adaptés pour changer ledit rapport variable entre les sous-trames presque vides et les sous-trames non presque vides durant ladite troisième sous-période (SP3) parmi lesdites au moins trois sous-périodes (SP1, SP2, SP3) sur la base des informations de charge telles que reçues ; et
• des moyens adaptés pour transmettre une notification à propos d'un motif de sous-trame presque vide utilisé à la pico station de base (P1).

9. Réseau de communication selon la revendication 8, dans lequel le terminal utilisateur (UE1) est configuré pour exécuter des mesures de qualité de canal durant la première sous-période (SP1) parmi lesdites au moins trois sous-périodes (SP1, SP2, SP3) et durant ladite deuxième sous-période (SP2) parmi lesdites au moins trois sous-périodes (SP1, SP2, SP3) et pour transmettre les mesures de canal à la pico station de base (P1).
